# EUROPÄISCHE PATENTSCHRIFT

(11) **EP 2 046 182 B1**
(45) Veröffentlichungstag und Bekanntmachung des Hinweises auf die Patenterteilung: **21.05.2014**
(21) Anmeldenummer: 06776507.3
(22) Anmeldetag: 29.07.2006
(51) Int. Cl.: A47L 9/20

(54) **STAUBSAUGER MIT FILTERSELBSTREINIGUNGSVORRICHTUNG**
VACUUM CLEANER WITH A SELF-CLEANING FILTER APPARATUS
ASPIRATEUR AVEC DISPOSITIF AUTONETTOYANT DU FILTRE

(43) Veröffentlichungstag der Anmeldung: 15.04.2009
(73) Patentinhaber: Alfred Kärcher GmbH & Co. KG, 71364 Winnenden (DE)
(72) Erfinder: ECKSTEIN, Daniel, 71364 Winnenden-Baach (DE); LANGEN, Thorsten, 70190 Stuttgart (DE); WEGNER, Martin, 70736 Fellbach (DE)
(74) Vertreter: Karrais, Martin
(86) Internationale Anmeldenummer: PCT/EP2006/007542
(87) Internationale Veröffentlichungsnummer: WO 2008/014795

(56) Entgegenhaltungen:
- EP-A- 1 166 705
- WO-A-97/19630
- WO-A-2004/100752
- DE-U1- 29 823 411

## Beschreibung

Die Erfindung betrifft einen Staubsauger mit einem Schmutzsammelbehälter, der einen Saugeinlass aufweist und über mindestens ein Filter und zumindest eine Absaugleitung mit mindestens einem Saugaggregat in Strömungsverbindung steht, und mit mindestens einem stromabwärts des mindestens einen Filters in die Absaugleitung einmündenden Fremdlufteinlass, der mittels zumindest eines Schließventils verschließbar ist, wobei das mindestens eine Schließventil einen Ventilkörper aufweist, der zwischen einer Schließstellung, in der er an einem Ventilsitz anliegt, und einer Offenstellung, in der er zum Ventilsitz beabstandet ist, hin und her bewegbar ist, wobei er von einer federelastischen Rückstelleinrichtung mit einer Schließkraft und in der Schließstellung zusätzlich von einer Magnethalterung mit einer magnetischen Haltekraft beaufschlagt ist.

Mittels derartiger Staubsauger kann Schmutz und vorzugsweise auch Flüssigkeit aufgesaugt werden, indem man den Schmutzsammelbehälter mit Hilfe von mindestens einem Saugaggregat mit Unterdruck beaufschlagt, so dass sich eine Saugströmung ausbildet und Schmutz und Flüssigkeit in den Schmutzsammelbehälter eingesaugt werden können. Die Staubsauger weisen ein oder mehrere Filter auf, die im Strömungsweg zwischen dem Schmutzsammelbehälter und dem mindestens einen Saugaggregat angeordnet sind und der Abscheidung von Feststoffen aus der Saugströmung dienen. Während des Saugbetriebes lagern sich zunehmend Schmutzteilchen an der dem Schmutzsammelbehälter zugewandten Seite des mindestens einen Filters an, so dass das bzw. die Filter nach einiger Zeit abgereinigt werden müssen. Zur Abreinigung kann die dem Schmutzsammelbehälter abgewandte Seite der Filter mit Fremdluft beaufschlagt werden, indem mindestens ein Schließventil geöffnet wird, so dass vom Fremdlufteinlass Fremdluft in die mindestens eine Absaugleitung einströmen und die dem Schmutzsammelbehälter abgewandte Seite des mindestens einen Filters beaufschlagen kann.

In der Gebrauchsmusterschrift DE 298 23 411 U1 ist ein Staubsauger der eingangs genannten Art beschrieben, wobei vorgeschlagen wird, zur Abreinigung eines Filters einen Saugschlauch, der an den Saugeinlass des Schmutzsammelbehälters angeschlossen ist, kurzzeitig zu verschließen, so dass sich aufgrund der Wirkung des Saugaggregates im Schmutzsammelbehälter ein starker Unterdruck ausbildet. Anschließend soll ein Schließventil kurzzeitig geöffnet werden. Das Filter wird dann in Gegenstromrichtung, das heißt entgegen der Richtung der während des normalen Saugbetriebes vorherrschenden Saugströmung, von der Fremdluft durchströmt, so dass sich am Filter anhaftende Schmutzteilchen ablösen.

In der DE 199 49 095 A1 wird der Einsatz von zwei Filtern vorgeschlagen, die wahlweise abgereinigt werden, wobei während der Abreinigung des einen Filters der Saugbetrieb über das andere Filter in eingeschränktem Umfange aufrechterhalten werden kann.

Aufgabe der vorliegenden Erfindung ist es, einen gattungsgemäßen Staubsauger derart weiterzubilden, dass er eine besonders wirkungsvolle Abreinigung des mindestens einen Filters ermöglicht.

Diese Aufgabe wird bei einem Staubsauger der eingangs genannten Art erfindungsgemäß dadurch gelöst, dass die Magnethalterung einen Elektromagneten aufweist, der zum Schließen des Schließventils mit einem Erregerstrom beaufschlagbar ist, wobei der Elektromagnet mit einer elektrischen Schalteinheit verbunden ist zum Ein- und Ausschalten des Erregerstroms, und dass der Ventilkörper bei einer Unterbrechung des Erregerstroms ausgehend von der Schließstellung über die Offenstellung kontinuierlich in die Schließstellung zurück bewegbar ist, wobei die Ausschaltdauer des Erregerstroms an die Bewegungsdauer des Ventilkörpers angepasst ist.

In die Erfindung fließt der Gedanke mit ein, dass eine wirkungsvolle Filterabreinigung dadurch erzielt werden kann, dass dem mindestens einen Filter die Fremdluft möglichst schlagartig innerhalb kurzer Zeit zugeführt wird, so dass das mindestens eine Filter kurzzeitig mit einem Druckstoß beaufschlagt wird. Aufgrund des Druckstoßes erfährt das mindestens eine Filter eine mechanische Erschütterung und zusätzlich wird das mindestens eine Filter in Gegenstromrichtung von Fremdluft durchströmt, so dass eine wirkungsvolle Abreinigung des Filters erzielt werden kann. Die Zuführung von Fremdluft erfolgt während der Öffnungsbewegung des Ventilkörpers, der in der Schließstellung mit der magnetischen Haltekraft des Elektromagneten beaufschlagt ist. Bei geschlossenem Schließventil bildet sich innerhalb des Schmutzsammelbehälters und der Absaugleitung ein Unterdruck aus, wohingegen auf der der Absaugleitung abgewandten Seite des Ventilkörpers ein höherer Druck herrscht, da auf dieser Seite der Ventilkörper mit Fremdluft beaufschlagt ist. Üblicherweise liegt in diesem Bereich Atmosphärendruck vor. Während des normalen Saugbetriebes unterliegt somit der Ventilkörper einer Druckdifferenz, die durch den Druck der Fremdluft und den in der Absaugleitung herrschenden Unterdruck bestimmt ist. Während des normalen Saugbetriebs ist das Schließventil geschlossen. Hierzu wird der Elektromagnet mit dem Erregerstrom beaufschlagt, so dass sich ein Magnetfeld ausbildet, das den Ventilkörper in seiner Schließstellung hält. Wird der Erregerstrom des Elektromagneten unterbrochen, so hebt der Ventilkörper aufgrund der auf ihn einwirkenden Druckdifferenz von einem zugeordneten Ventilsitz ab und führt eine schwingungsähnliche Bewegung ausgehend von seiner Schließstellung in seine Offenstellung und zurück in seine Schließstellung aus. Die Schwingungs- oder Bewegungsdauer des Ventilkörpers, d. h. die Zeitdauer der Bewegung des Ventilkörpers von seiner Schließstellung über die Offenstellung zurück in die Schließstellung, ist im Wesentlichen vorgegeben durch die Federkonstante der federelastischen Rückstelleinrichtung. Erfindungsgemäß ist die Ausschaltdauer des Erregerstroms an die Bewegungsdauer des Ventilkörpers angepasst. Es kann beispielsweise vorgesehen sein, dass der Erregerstrom maximal so lange unterbrochen ist, bis der sich vom Ventilsitz abhebende Ventilkörper von der federelastischen Rückstelleinrichtung wieder zum Ventilsitz zurückgeführt wurde, dass also die Ausschaltdauer des Erregerstroms maximal der Bewegungsdauer des Ventilkörpers entspricht. Spätestens zu dem Zeitpunkt, zu dem der Ventilkörper wieder den zugeordneten Ventilsitz erreicht, wird dem Elektromagneten wieder der Erregerstrom zugeführt, so dass der Ventilkörper wieder zuverlässig am Ventilsitz gehalten wird und der normale Saugbetrieb wieder aufgenommen werden kann. Es kann auch vorgesehen sein, dass man den Erregerstrom wieder einschaltet, wenn der Ventilkörper wieder eine Bewegung in Richtung auf den Ventilsitz ausführt, d. h. dass die Ausschaltdauer des Erregerstroms mindestens der halben und maximal der ganzen Bewegungsdauer des Ventilkörpers entspricht. Die Bewegung des Ventilkörpers kann dann durch den Einfluss des Magnetfelds unterstützt werden. Eine Anpassung der Ausschaltdauer des Erregerstroms an die Bewegungsdauer des Ventilkörpers kann auch in der Weise erfolgen, dass die Ausschaltdauer gleich lange ist wie die Bewegungsdauer. Bei einer derartigen Ausgestaltung wird der Ventilkörper dann wieder mit einer magnetischen Haltekraft beaufschlagt, wenn er den Ventilsitz erreicht.

Es hat sich gezeigt, dass durch eine Abstimmung der Ausschaltdauer des Erregerstroms an die Bewegungsdauer des Ventilkörpers eine sehr kurzzeitige Zuführung von Fremdluft zu dem mindestens einen Filter erzielt werden kann. Dies hat den Vorteil, dass eine sehr kurze Öffnungsbewegung des Ventilkörpers erzielt werden kann, so dass nur eine sehr begrenzte Menge an Fremdluft in den Schmutzsammelbehälter und die Absaugleitung einströmen kann. Dies wiederum hat zur Folge, dass für den Benutzer der Saugbetrieb kaum merklich unterbrochen wird, vielmehr kann ein quasi kontinuierlicher Saugbetrieb erreicht werden, wobei dennoch eine wirkungsvolle Filterabreinigung erzielt wird. Die Anpassung der Ausschaltdauer des Erregerstroms an die Bewegungsdauer des Ventilkörpers ermöglicht es auf konstruktiv einfache Weise, sämtliche vorhandenen Filter des Staubsaugers gleichzeitig abzureinigen, indem die gesamte, dem Schmutzsammelbehälter abgewandte Seite des mindestens einen Filters mit Fremdluft beaufschlagt wird. Die Fremdluft wird dem Filter schlagartig zugeführt, wobei das mindestens eine Saugaggregat permanent mit dem Filter in Strömungsverbindung steht, also auch während der Zeit seiner Abreinigung. Während des normalen Saugbetriebes werden sämtliche Filter des Staubsaugers gleichzeitig mit Saugluft durchströmt, so dass während des normalen Saugbetriebes eine große Filterfläche zur Abscheidung von Schmutzpartikeln zur Verfügung steht. Der Staubsauger zeichnet sich somit durch eine hohe Saugkapazität aus.

Die Ausschaltdauer des Erregerstroms beträgt vorzugsweise etwa 0,02 Sekunden bis etwa 2 Sekunden.

Von besonderem Vorteil ist es, wenn die Ausschaltdauer des Erregerstroms zwischen 0,04 Sekunden und etwa 1 Sekunde beträgt. Insbesondere kann die Ausschaltdauer etwa 0,08 Sekunden bis circa 0,12 Sekunden betragen. Es hat sich gezeigt, dass mittels einer derart kurzen Ausschaltdauer eine besonders wirkungsvolle Filterabreinigung erzielt werden kann.

Der Erregerstrom ist vorzugsweise in zeitlichen Abständen von circa 10 Sekunden bis etwa 120 Sekunden ausschaltbar, das heißt vorzugsweise erfolgt alle 10 Sekunden bis etwa alle 120 Sekunden eine kurzzeitige Abreinigung sämtlicher Filter des Staubsaugers.

Günstig ist es, wenn der Erregerstrom in gleichbleibenden zeitlichen Abständen von etwa 10 Sekunden bis etwa 60 Sekunden mehrmals hintereinander für circa 0,05 Sekunden bis etwa 0,15 Sekunden ausschaltbar ist. Dies hat den Vorteil, dass das mindestens eine Filter nach einem normalen Saugbetrieb, der circa 10 Sekunden bis etwa 60 Sekunden andauert, mehrmals hintereinander auf seiner dem Schmutzsammelbehälter abgewandten Seite für etwa 0,05 Sekunden bis etwa 0,15 Sekunden mit Fremdluft beaufschlagt wird. Die zeitlichen Abstände zwischen zwei aufeinanderfolgenden Fremdluftbeaufschlagungen können beispielsweise 0,3 Sekunden bis 0,8 Sekunden betragen, insbesondere 0,4 bis 0,6 Sekunden.

Um sicherzustellen, dass das Magnetfeld bei einer Unterbrechung des Erregerstroms innerhalb sehr kurzer Zeit zusammenbricht und sich damit der Ventilkörper aufgrund der auf ihn einwirkenden Druckdifferenz vom Ventilsitz abhebt, ist bei einer bevorzugten Ausgestaltung vorgesehen, dass parallel zum Elektromagneten mindestens ein bei Wegfall der Strombeaufschlagung des Elektromagneten zumindest einen Teil der im Elektromagneten gespeicherten Energie aufnehmendes elektrisches Bauteil geschaltet sind. Der Einsatz des Energie aufnehmenden Bauteils ermöglicht es, bei einer Unterbrechung des Erregerstroms das Magnetfeld des Elektromagneten innerhalb von etwa 10 Millisekunden praktisch vollständig abzubauen. Folglich entfällt bei einer Unterbrechung des Erregerstroms praktisch instantan die magnetische Haltekraft für den Ventilkörper, so dass dieser innerhalb weniger Millisekunden vom Ventilsitz abhebt und eine kontinuierliche Bewegung ausgehend von seiner Schließstellung über seine Offenstellung in seine Schließstellung ausführt.

Beispielsweise können eine Freilaufdiode und in Reihe zu dieser mindestens ein Energie aufnehmendes Bauteil, insbesondere eine entgegengesetzt zur Freilaufdiode gepolte Zener-Diode, parallel zum Elektromagneten geschaltet sein. Der Elektromagnet bildet eine beträchtliche Induktivität aus, so dass bei einer Unterbrechung des Erregerstroms durch Selbstinduktion eine Spannung induziert wird. Um diese Spannung abzubauen, ist parallel zum Elektromagneten mindestens ein Energie aufnehmendes Bauteil geschaltet, beispielsweise kann eine Freilaufdiode zum Einsatz kommen, die den Elektromagneten im Hinblick auf die induzierte Spannung kurzschließt, d. h. die Freilaufdiode ist bezüglich der induzierten Spannung in Durchlassrichtung geschaltet. Zusätzlich kann in Reihe zur Freilaufdiode eine Zener-Diode angeordnet sein, die bezüglich der induzierten Spannung in Sperrrichtung geschaltet ist. Dies hat zur Folge, dass die induzierte Spannung an der Zener-Diode einen Spannungsabfall in Höhe seiner Durchbruchspannung erfährt. Die Durchbruchspannung beträgt vorzugsweise mehr als 50 Volt, beispielsweise 56 Volt.

Von Vorteil ist es, wenn der Elektromagnet an einer Filterhalterung des Schließventils angeordnet ist, die den Ventilsitz ausbildet, und wenn der Ventilkörper ein dem Elektromagneten zugeordnetes magnetisierbares Element aufweist, das in der Schließstellung des Ventilkörpers mit dem Elektromagneten einen Magnetkreis ausbildet. In der Schließstellung des Ventilkörpers bündelt das magnetisierbare Element die magnetischen Feldlinien des strombeaufschlagten Elektromagneten. Nimmt der Ventilkörper jedoch einen gewissen Abstand zum Ventilsitz ein, so ist der magnetische Kreis zwischen dem Elektromagneten und dem magnetisierbaren Element unterbrochen. Das magnetisierbare Element kann beispielsweise plattenförmig ausgestaltet sein und es kann aus einem eisenhaltigen Material hergestellt sein. Der Einsatz des magnetisierbaren Elementes unterstützt eine möglichst kurzzeitige Bewegung des Ventilkörpers, denn aufgrund des Einsatzes des magnetisierbaren Elementes wird der Ventilkörper nur in unmittelbarer Nähe zum Elektromagneten mit der magnetischen Haltekraft beaufschlagt. In Kombination mit dem magnetisierbaren Element bildet der Elektromagnet einen Haftmagneten aus, an dem der Ventilkörper zwar anhaftet, wenn er am Elektromagneten anliegt, der Ventilkörper wird aber vom Elektromagneten nicht bereits angezogen, wenn er sich diesem annähert. Somit wird die schwingungsartige Bewegung des Ventilkörpers nicht merklich durch die Haltekraft des Elektromagneten beeinflusst. Der Ventilkörper kann eine von magnetischen Einflüssen praktisch unbeeinflusste schwingungsartige Bewegung ausführen, und zwar auch dann, wenn der Erregerstrom bereits zu einem Zeitpunkt wieder eingeschaltet wird, zu dem der Ventilkörper noch nicht zum Ventilsitz zurückgekehrt ist. Der sich dem Ventilsitz annähernde Ventilkörper unterliegt erst in Abständen von weniger als etwa 2 Millimeter der Haltekraft des Elektromagneten.

Das Magnetfeld des Elektromagneten führt zu einer Magnetisierung des magnetisierbaren Elementes. Wird das Magnetfeld des Elektromagneten durch Unterbrechen des Erregerstromes abgeschaltet, so bleibt im magnetisierbaren Element eine Magnetisierung zurück, die eine auf den Elektromagneten gerichtete Haltekraft zur Folge hat. Um den Einfluss der zurückbleibenden Magnetisierung, das heißt der Remanenz des Ventilkörpers möglichst gering zu halten, ist es von Vorteil, wenn das magnetisierbare Element in der Schließstellung des Ventilkörpers unter Ausbildung eines Luftspaltes an der Stirnseite des Elektromagneten anliegt. Grundsätzlich kann die Remanenz des Ventilkörpers beispielsweise durch Wahl einer speziellen Legierung für das magnetisierbare Element gering gehalten werden. Dies ist allerdings mit nicht unerheblichen Kosten verbunden. Es hat sich gezeigt, dass durch die Bereitstellung eines Luftspaltes zwischen dem magnetisierbaren Element und dem Elektromagneten der Einfluss der Remanenz des magnetisierbaren Elementes sehr gering gehalten werden kann.

Die Breite des Luftspaltes ist vorzugsweise geringer als 1 Millimeter, sie kann beispielsweise etwa 0,5 Millimeter betragen.

Zur Ausgestaltung der federelastischen Rückstelleinrichtung wurden bisher keine näheren Angaben gemacht. Günstig ist es, wenn die federelastische Rückstelleinrichtung eine Schließfeder und zusätzlich eine Anschlagfeder aufweist, wobei die Schließfeder den Ventilkörper unabhängig von seiner Lage relativ zum Ventilsitz mit einer Schließkraft beaufschlagt und wobei die Anschlagfeder den Ventilkörper nur in einer zum Ventilsitz beabstandeten Stellung mit einer Rückstellkraft beaufschlagt. Durch die Bereitstellung der Anschlagfeder kann auf konstruktiv einfache Weise eine besonders kurze Öffnungsbewegung des Ventilkörpers erzielt werden. Ausgehend von seiner Schließstellung unterliegt der Ventilkörper zunächst lediglich der Schließkraft der Schließfeder, so dass sich der Ventilkörper bei Wegfall der magnetischen Haltekraft des Elektromagneten bereits bei einer verhältnismäßig geringen Druckdifferenz zwischen dem Druck der Fremdluft und dem in der Absaugleitung herrschenden Unterdruck vom Ventilsitz abheben kann. Damit kann bereits bei Vorliegen einer verhältnismäßig geringen Druckdifferenz eine zuverlässige Öffnung des Schließventils und damit eine Abreinigung des mindestens einen Filters erzeugt werden. Erst wenn der Ventilkörper einen gewissen Abstand zum Ventilsitz einnimmt, kommt die Anschlagfeder zur Wirkung, die den Ventilkörper mit einer Rückstoßkraft beaufschlagt. Die Anschlagfeder nimmt die Bewegungsenergie des Ventilkörpers auf und beschleunigt ihn zurück in Richtung Ventilsitz. Mit Hilfe der Anschlagfeder kann das Schließventil innerhalb sehr kurzer Zeit wieder verschlossen werden, insbesondere nach einer Zeit von weniger als 0,5 Sekunden, vorzugsweise weniger als 0,2 Sekunden.

Die Anschlagfeder weist bei einer bevorzugten Ausgestaltung eine größere Federkonstante auf als die Schließfeder. Die Anschlagfeder ist somit härter als die Schließfeder, das heißt es ist eine höhere Kraft erforderlich, um die Anschlagfeder zusammenzudrücken als dies bei der Schließfeder der Fall ist. Die Anschlagfeder kann ebenso wie die Schließfeder eine lineare oder auch eine nicht-lineare Kennlinie aufweisen, beispielsweise kann vorgesehen sein, dass die Anschlagfeder und/oder die Schließfeder mit zunehmendem Federweg härter werden. Durch Wahl der Federkonstanten der Schließfeder und der Anschlagfeder kann die Dauer der schwingungsartigen Bewegung des Ventilkörpers beeinflusst werden. Je größer die Federkonstante ist, desto kürzer ist die Bewegungsdauer des Ventilkörpers.

Bei einer bevorzugten Ausgestaltung des erfindungsgemäßen Staubsaugers sind die Schließfeder und die Anschlagfeder als Schraubenfedern mit unterschiedlichen Durchmessern ausgestaltet, wobei eine der beiden Schraubenfedern die andere Schraubenfeder in Umfangsrichtung umgibt. Dies ermöglicht eine platzsparende Anordnung der Schließfeder und der Anschlagfeder und ermöglicht darüber hinaus eine einfache Montage.

Vorzugsweise umgibt die Schließfeder die Anschlagfeder in Umfangsrichtung. Dies hat den Vorteil, dass der Ventilkörper von einer verhältnismäßig großen Schließfeder in seine Schließstellung zurückgeführt wird, das heißt die Schließfeder liegt mit einer verhältnismäßig großen Anlagefläche am Ventilkörper an. Die Kippstabilität des Ventilkörpers wird dadurch verbessert.

Der Staubsauger kann mehrere Filter aufweisen. Als besonders vorteilhaft hat es sich erwiesen, wenn der Staubsauger ein einziges Filter umfasst. Insbesondere kann vorgesehen sein, dass das Filter durch gleichzeitiges Öffnen aller Schließventile über seine gesamte Fläche mit Fremdluft beaufschlagbar ist.

Bei einer konstruktiv besonders einfachen Ausgestaltung des erfindungsgemäßen Staubsaugers weist dieser lediglich ein einziges Schließventil auf, das auf der dem einzigen Filter abgewandten Seite einer Strömungsdurchlässe aufweisenden Filterhalterung positioniert ist. Durch Öffnen des Schließventils wird das einzige Filter über seine gesamte Fläche mit Fremdluft beaufschlagt.

Vorzugsweise ist das mindestens eine Filter mittels des zumindest einen Schließventils unter Aufrechterhaltung eines Unterdrucks im Mündungsbereich eines in den Saugeinlass einmündenden Saugschlauches mit Fremdluft beaufschlagbar. Wird das mindestens eine Schließventil geöffnet, so steigt der Druck auf der dem Schmutzsammelbehälter abgewandten Seite des Filters schlagartig an und wird dann gleich wieder abgebaut. Der schlagartige Druckanstieg bewirkt eine wirkungsvolle Abreinigung des Filters, da der Druckanstieg jedoch von dem mindestens einen Saugaggregat, das auch während der Filterabreinigung mit dem Filter in Strömungsverbindung steht, wieder abgebaut wird, führt der Druckanstieg nicht zu einer vollständigen Unterbrechung des Unterdrucks im Mündungsbereichs des in den Saugeinlass einmündenden Saugschlauches. Es kann vielmehr ein quasi kontinuierlicher Saugbetrieb aufrechterhalten werden.

Die nachfolgende Beschreibung einer bevorzugten Ausführungsform der Erfindung dient im Zusammenhang mit der Zeichnung der näheren Erläuterung. Es zeigen:
- Figur 1:: eine schematische Schnittansicht eines erfindungsgemäßen Staubsaugers;
- Figur 2:: eine vergrößerte Darstellung von Detail A aus Figur 1;
- Figur 3:: ein Blockschaltbild einer Versorgungsschaltung für einen Elektromagneten des Staubsaugers;
- Figur 4:: eine schematische Darstellung der Unterbrechung des Erregerstroms des Elektromagneten und
- Figur 5:: eine vergrößerte schematische Darstellung der Unterbrechung des Erregerstroms.

In der Zeichnung ist schematisch ein Staubsauger 10 dargestellt mit einem Unterteil, das einen Schmutzsammelbehälter 12 ausbildet, und mit einem Oberteil 14, das auf das Unterteil aufgesetzt ist und ein Saugaggregat 16 aufnimmt. Der Schmutzsammelbehälter 12 umfasst einen Saugeinlass 18, an den ein Saugschlauch 20 anschließbar ist. An dem in der Zeichnung zur Erzielung einer besseren Übersicht nicht dargestellten freien Ende des Saugschlauches 20 kann eine Saugdüse angeschlossen werden. Alternativ kann vorgesehen sein, dass der Saugschlauch 20 an ein Bearbeitungswerkzeug, beispielsweise ein Bohraggregat oder ein Fräsaggregat, angeschlossen wird, so dass Staub, der während des Betriebes des Bearbeitungswerkzeuges anfällt, abgesaugt werden kann.

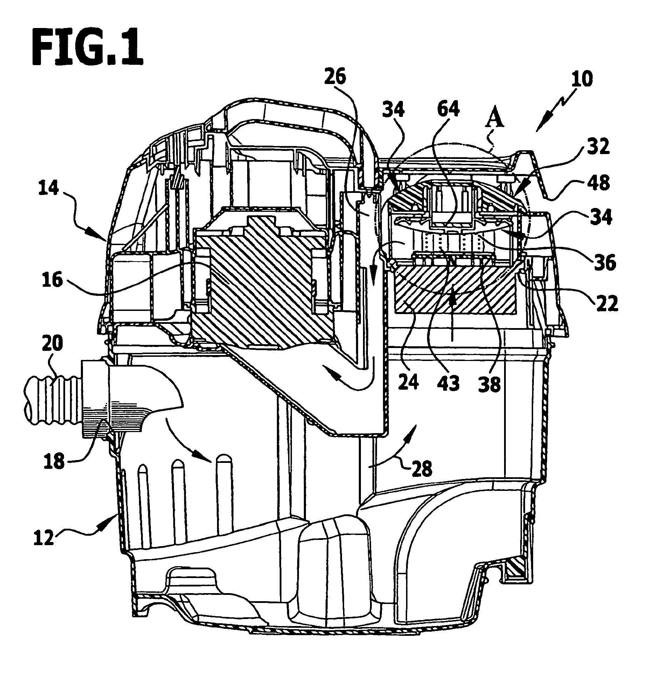

Das Oberteil 14 bildet einen Saugauslass 22 für den Schmutzsammelbehälter 12 aus. Am Saugauslass 22 ist ein Faltenfilter 24 gehalten, an das sich eine Absaugleitung in Form eines Saugkanals 26 anschließt. Über den Saugkanal 26 steht das Faltenfilter 24 permanent mit dem Saugaggregat 16 in Strömungsverbindung. Der Schmutzsammelbehälter 12 kann über den Saugkanal 26 und das Faltenfilter 24 vom Saugaggregat 16 mit Unterdruck beaufschlagt werden, so dass sich eine in Figur 1 durch die Pfeile 28 symbolisierte Saugströmung ausbildet, unter deren Wirkung Schmutz in den Schmutzsammelbehälter 12 eingesaugt werden kann. Mittels des Faltenfilters 24 können die Schmutzteilchen aus der Saugströmung 28 abgeschieden werden.

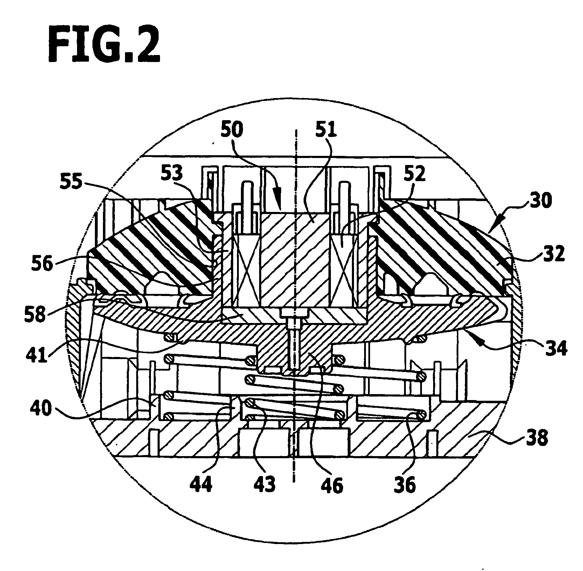

Oberhalb des Faltenfilters 24 ist im Oberteil 14 ein Schließventil 30 angeordnet, das in Figur 2 vergrößert dargestellt ist. Es umfasst eine ortsfest im Oberteil 14 angeordnete Ventilhalterung 32, die einen Ventilsitz ausbildet und mit einem Ventilkörper in Form eines kreisrunden Ventiltellers 34 zusammenwirkt. Der Ventilteller 34 ist mittels einer Schließfeder 36 mit einer Schließkraft in Richtung auf die Ventilhalterung 32 beaufschlagt. Die Schließfeder 36 weist eine lineare Kennlinie auf und ist zwischen einer plattenartigen, eine Vielzahl von Strömungsdurchlässen aufweisenden, ortsfest im Oberteil 14 angeordneten Filterhalterung 38 und dem Ventilteller 34 eingespannt. Die Filterhalterung 38 weist auf ihrer dem Schließventil 30 zugewandten Oberseite einen äußeren Ringkragen 40 auf, der den benachbarten Endbereich der als Schraubenfeder ausgebildeten Schließfeder 36 in Umfangsrichtung umgibt. Der Ventilteller 34 weist auf seiner der Filterhalterung 38 zugewandten Unterseite einen Ringwulst 41 auf, an dem die Schließfeder 36 außenseitig anliegt.

Zusätzlich zur Schließfeder 36 trägt die Filterhalterung 38 ein federndes Anschlagelement in Form einer Anschlagfeder 43, die ebenso wie die Schließfeder 36 als Schraubenfeder ausgebildet ist und eine lineare Kennlinie aufweist. Zur Halterung der Anschlagfeder 43 umfasst die Filterhalterung 38 auf ihrer dem Schließventil 30 zugewandten Oberseite einen konzentrisch zum äußeren Kragen 40 angeordneten inneren Ringkragen 44, in den die Anschlagfeder 43 mit einem Endabschnitt eintaucht. Fluchtend zum inneren Ringkragen 44 ist an den Ventilteller 34 unterseitig ein Führungszapfen 46 angeformt, der in der Figur 2 dargestellten Schließstellung des Ventiltellers 34 von einem Endbereich der Anschlagfeder 43 umgeben ist. Die Anschlagfeder 43 steht im Gegensatz zur Schließfeder in der Schließstellung des Ventiltellers nicht unter Vorspannung. Erst wenn sich der Ventilteller 34 vom Ventilsitz der Ventilhalterung 32 abhebt, gelangt die Anschlagfeder 43 an der Unterseite des Ventiltellers 34 zur Anlage und wird bei einer weiteren Bewegung des Ventiltellers 34 etwas zusammengedrückt.

Die Ventilhalterung 32 weist eine Vielzahl von in der Zeichnung nicht dargestellten Durchgangsöffnungen auf, die in den Ventilsitz einmünden, an dem der Ventilteller 34 abdichtend anliegt, wenn er seine Schließstellung einnimmt. In Höhe der Ventilhalterung 32 weist das Oberteil 14 eine seitliche Öffnung 48 auf. Über die seitliche Öffnung 48 kann Fremdluft in die Durchgangsöffnungen der Ventilhalterung 32 einströmen. Nimmt der Ventilteller 34 eine zur Ventilhalterung 32 und damit auch zum Ventilsitz beabstandete Stellung ein, so steht die seitliche Öffnung 48 über die Durchgangsöffnungen der Ventilhalterung 32 mit dem Saugkanal 26 in Strömungsverbindung und Fremdluft kann die dem Schmutzsammelbehälter 12 abgewandte Seite des Filters 24 beaufschlagen. Nimmt der Ventilteller 34 seine Schließstellung ein, so ist die Strömungsverbindung zwischen dem Saugkanal 26 und der seitlichen Öffnung 48 unterbrochen.

In einem zentralen Bereich trägt die Ventilhalterung 32 eine Magnethalterung in Form eines Elektromagneten 50 mit einem Magnetkern 51, der von einer Magnetspule 52 umgeben ist. Den außenseitigen Abschluss des Elektromagneten 50 bildet ein zylinderförmiger Mantel 53, der ebenso wie der Magnetkern 51 aus einem magnetisierbaren Material gefertigt ist. Der Mantel 53 ist in Umfangsrichtung von einer Führungsaufnahme in Form eines Ringraumes 55 umgeben, in den eine oberseitig an den Ventilteller 34 angeformte Führungshülse 56 eintaucht. Der Ringraum 55 und die Führungshülse 56 bilden Führungselemente zur verschieblichen Lagerung des Ventiltellers 34 aus. Die Führungshülse 56 nimmt ein magnetisierbares Element in Form einer Eisenplatte 58 auf, die in der Schließstellung des Ventiltellers 34 unter Ausbildung eines schmalen Luftspaltes von circa 0,5 Millimeter Breite an der freien Stirnseite des Elektromagneten 50 anliegt und in Kombination mit dem Magnetkern 51 und dem Mantel 53 einen Magnetkreis ausbildet.

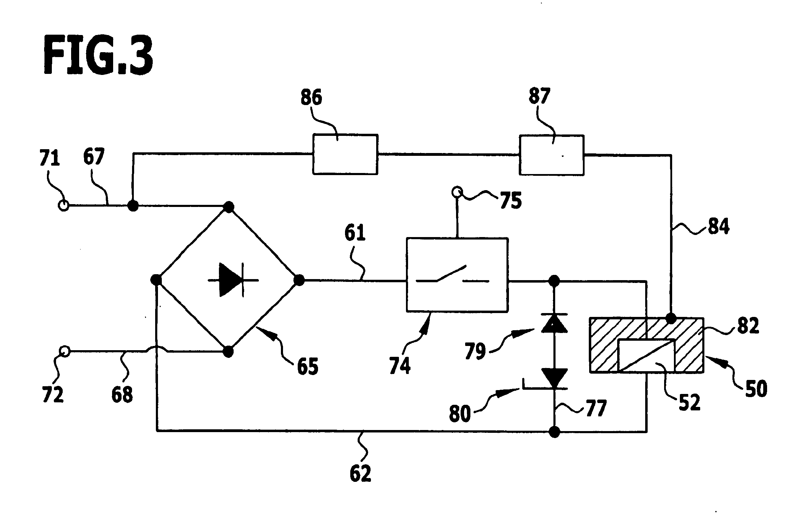

Die Stromversorgung des Elektromagneten 50 ist in Figur 3 schematisch dargestellt. Der Elektromagnet 50 ist über eine erste Stromversorgungsleitung 61 und eine zweite Stromversorgungsleitung 62 an eine Gleichrichtereinheit 65 angeschlossen, die über eine erste Anschlussleitung 67 und eine zweite Anschlussleitung 68 mit Spannungsversorgungsanschlüssen in Form von Netzanschlüssen 71 und 72 verbunden ist. An die Netzanschlüsse 71, 72 kann in üblicher Weise ein Anschlusskabel des Staubsaugers 10 angeschlossen werden, das die Netzanschlüsse 71, 72 mit einer Wechselspannungsquelle verbindet.

In die erste Stromversorgungsleitung 61 ist eine elektrische Schalteinheit 74 geschaltet mit einem Steueranschluss 75, der von einer in der Zeichnung nicht dargestellten Steuereinheit des Staubsaugers 10 mit einem Steuersignal beaufschlagt werden kann.

Der Elektromagnet 50 wird von einer Freilaufleitung 77 überbrückt, in die in Reihe zueinander eine Freilaufdiode 79 und eine Zener-Diode 80 geschaltet sind. Die Zener-Diode 80 ist entgegengesetzt zur Freilaufdiode 79 gepolt.

Der Magnetkern 51 und der Mantel 53 des Elektromagneten 50 bilden ein Gehäuse aus, das in Figur 3 mit der Bezugsziffer 82 belegt ist. Das Gehäuse steht über eine Potentialausgleichsleitung 84 mit der ersten Anschlussleitung 67 in Verbindung, wobei in die Potentialausgleichsleitung 84 in Reihe zueinander ein erster ohmscher Widerstand 86 und ein zweiter ohmscher Widerstand 87 geschaltet sind. Über die Potentialausgleichsleitung 84 können statische Aufladungen des Gehäuses 82 an die erste Anschlussleitung 67 und damit an den Netzanschluss 71 abgeführt werden. Derartige Aufladungen können sich ausbilden aufgrund von Staubpartikeln, die während des Betriebes des Staubsaugers 10 am Gehäuse 82 vorbeiströmen. Die beiden ohmschen Widerstände 86 und 87 weisen unterschiedliche Widerstandswerte auf, beispielsweise kann der erste ohmsche Widerstand 86 einen Widerstandswert von etwa 8 Megaohm aufweisen und der zweite ohmsche Widerstand 87 kann einen Widerstandswert von circa 12 Megaohm aufweisen.

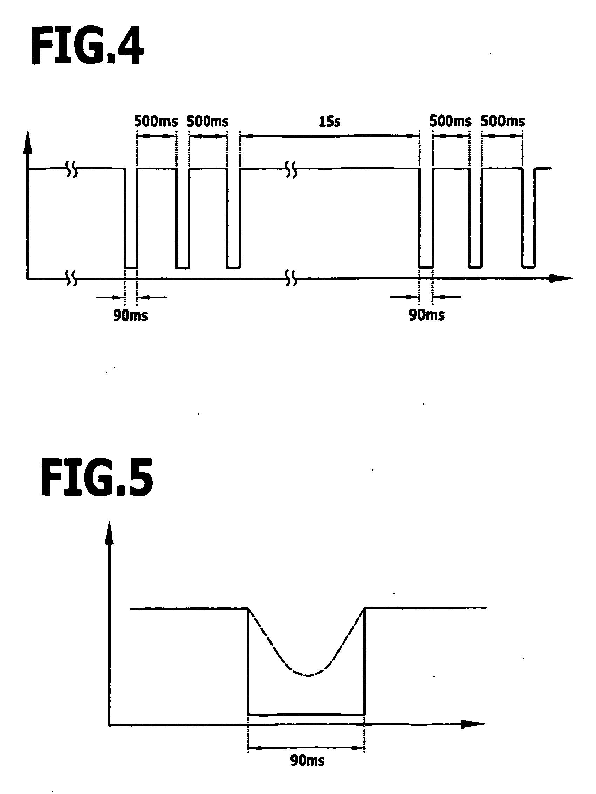

Während des normalen Saugbetriebes wird der Elektromagnet 50 über die erste Stromversorgungsleitung 61 und die zweite Stromversorgungsleitung 62 mit einem Erregerstrom beaufschlagt, so dass sich am Elektromagnet 50 ein Magnetfeld ausbildet, das auf den Ventilteller 34 eine magnetische Haltekraft ausübt. Unter der Wirkung der magnetischen Haltekraft wird der Ventilteller 34 dichtend am Ventilsitz der Ventilhalterung 32 gehalten. Das Saugaggregat 16 beaufschlagt den Schmutzsammelbehälter 12 und den Saugkanal 26 mit einem Unterdruck, so dass Schmutzpartikel ebenso wie Flüssigkeitströpfchen in den Schmutzsammelbehälter 12 eingesaugt werden können. Schmutzpartikel werden am Filter 24 abgeschieden, so dass sich dieses während des normalen Saugbetriebes allmählich zusetzt. In zeitlichen Abständen von 15 Sekunden wird deshalb der Erregerstrom des Elektromagneten 50 dreimal hintereinander jeweils für 90 Millisekunden unterbrochen, wobei die zeitlichen Abstände zwischen den kurzzeitigen Stromunterbrechungen 500 Millisekunden betragen. Dies wird aus Figur 4 deutlich, die den zeitlichen Verlauf des Erregerstroms schematisch darstellt..

Die Unterbrechung des Erregerstroms hat zur Folge, dass das Magnetfeld des Elektromagneten innerhalb sehr kurzer Zeit, nämlich innerhalb von weniger als 10 Millisekunden, zusammenbricht und damit die magnetische Haltekraft für den Ventilteller 34 entfällt. Dies wiederum bewirkt, dass der Ventilteller 34 aufgrund der auf ihn einwirkenden Druckdifferenz, die sich aus dem Außendruck der im Bereich der Ventilhalterung 32 vorliegenden Fremdluft, üblicherweise Atmosphärendruck, und dem Innendruck innerhalb des Saugkanals 26 ergibt, entgegen der Wirkung der Schließfeder 36 vom Ventilsitz abhebt. Fremdluft kann dann schlagartig durch die Durchgangsöffnungen der Ventilhalterung 32 hindurch in den Saugkanal 26 einströmen, so dass das Filter 24 auf seiner dem Schmutzsammelbehälter 12 abgewandten Seite schlagartig mit Fremdluft beaufschlagt wird. Dies führt zu einer mechanischen Erschütterung des Filters 24. Außerdem wird das Filter 24 in Gegenstromrichtung von der Fremdluft durchströmt. Dies hat insgesamt eine wirkungsvolle Abreinigung des Filters 24 zur Folge.

Der sich vom Ventilsitz abhebende Ventilteller 34 gelangt nach einer kurzen Hubbewegung mit seiner Unterseite an die Anschlagfeder 43, die den Ventilteller 34 mit einer Rückstoßkraft auf die Ventilhalterung 32 beaufschlagt. Die Anschlagfeder 43 nimmt die Bewegungsenergie des Ventiltellers 34 auf und wirkt somit als eine Art Stoßdämpfer für den Ventilteller 34. Letzerer wird von der Anschlagfeder 43 in Richtung auf den Ventilsitz beschleunigt. Der Ventilteller 34 führt daher ausgehend vom Ventilsitz eine kontinuierliche Hin- und Herbewegung aus. In Figur 5 ist der Bewegungsverlauf des Ventiltellers 34 strichpunktiert dargestellt und der Erregerstrom ist in Figur 5 mit durchgezogener Linie veranschaulicht. Wie aus Figur 5 deutlich ist, wird der Elektromagnet 50 von der Schalteinheit 74 erst dann erneut mit dem Erregerstrom beaufschlagt, wenn der Ventilkörper 34 wieder den Ventilsitz erreicht hat. Die Ausschaltdauer des Erregerstroms, die in der dargestellten Ausführungsform 90 Millisekunden beträgt, entspricht also der Bewegungsdauer des Ventilkörpers, das heißt sie entspricht der Zeit, die der Ventilkörper benötigt, um in einer kontinuierlichen Bewegung ausgehend von seiner Schließstellung über seine Offenstellung zurück zu seiner Schließstellung zu gelangen. Erreicht der Ventilkörper 34 wieder den Ventilsitz, so wird der Elektromagnet 50 wieder mit dem Erregerstrom beaufschlagt, es bildet sich praktisch instantan wieder ein Magnetfeld aus, so dass der Ventilkörper 34 wieder mit der magnetischen Haltekraft beaufschlagt wird und daher wieder dichtend am Ventilsitz gehalten wird. Es könnte auch vorgesehen sein, dass der Erregerstrom bereits zu einem früheren Zeitpunkt wieder eingeschaltet wird, beispielsweise dann, wenn sich der Ventilteller 34 wieder in Richtung auf den Ventilsitz bewegt, d. h. die Ausschaltdauer könnte zwischen der halben und der ganzen Bewegungsdauer des Ventiltellers 34 betragen.

Während der Öffnungsbewegung des Ventiltellers 34 dringt Fremdluft an die dem Schmutzsammelbehälter 12 abgewandte Seite des Filters 24, so dass dieses abgereinigt wird. Um eine besonders wirkungsvolle Filterabreinigung zu erzielen, wird das Schließventil 30 in einem Abreinigungszyklus dreimal hintereinander in Abständen von 500 Millisekunden für jeweils 90 Millisekunden geöffnet, um anschließend wieder für 15 Sekunden geschlossen gehalten zu werden.

Liegt der Ventilteller 34 dichtend am zugeordneten Ventilsitz an, so bildet sich zwischen der Eisenplatte 58 und dem Elektromagneten 50 ein Luftspalt von etwa 0,5 Millimeter aus. Dieser Luftspalt stellt sicher, dass die Remanenz der Eisenplatte 58 keinen merklichen Einfluss ausübt auf die schwingungsähnliche Bewegung des Ventiltellers 34. Der Luftspalt stellt in Kombination mit dem Einsatz der Freilaufdiode 79 und der Zener-Diode 80 sicher, dass der Ventilteller 34 bei einer Unterbrechung des Erregerstroms praktisch instantan vom Ventilsitz abgehoben wird aufgrund der auf ihn einwirkenden Druckdifferenz. Der Ventilteller 34 kann somit eine sehr schnelle Öffnungsbewegung ausführen. Aufgrund der kurzen Öffnung des Schließventils 30 wird auch während der Filterabreinigung im Mündungsbereich des in den Saugeinlass 8 einströmenden Saugschlauches 20 ein Unterdruck aufrechterhalten. Dies hat zur Folge, dass für den Benutzer ein quasi kontinuierlicher Saugbetrieb möglich ist und dass dennoch eine zuverlässige Filterabreinigung gewährleistet ist.

## Patentansprüche

1. Staubsauger mit einem Schmutzsammelbehälter, der einen Saugeinlass aufweist und über mindestens ein Filter (24) und zumindest eine Absaugleitung mit mindestens einem Saugaggregat (16) in Strömungsverbindung steht, und mit mindestens einem stromabwärts des mindestens einen Filters in die Absaugleitung einmündenden Fremdlufteinlass (48), der mittels zumindest eines Schließventils (30) verschließbar ist, wobei das mindestens eine Schließventil einen Ventilkörper aufweist, der zwischen einer Schließstellung, in der er an einem Ventilsitz anliegt, und einer Offenstellung, in der er zum Ventilsitz beabstandet ist, hin und her bewegbar ist, wobei er von einer federelastischen Rückstelleinrichtung mit einer Schließkraft und in der Schließstellung zusätzlich von einer Magnethalterung mit einer magnetischen Haltekraft beaufschlagt ist, **dadurch gekennzeichnet, dass** die Magnethalterung einen Elektromagneten (50) aufweist, der zum Schließen des Schließventils (30) mit einem Erregerstrom beaufschlagbar ist, wobei der Elektromagnet (50) mit einer elektrischen Schalteinheit (74) verbunden ist zum Ein- und Ausschalten des Erregerstroms, und dass der Ventilkörper (34) bei einer Unterbrechung des Erregerstroms ausgehend von der Schließstellung über die Offenstellung kontinuierlich in die Schließstellung zurück bewegbar ist, wobei die Ausschaltdauer des Erregerstroms an die Bewegungsdauer des Ventilkörpers (34) angepasst ist.

2. Staubsauger nach Anspruch 1, **dadurch gekennzeichnet, dass** die Ausschaltdauer des Erregerstroms circa 0,02 Sekunden bis etwa 2 Sekunden beträgt.

3. Staubsauger nach Anspruch 1 oder 2, **dadurch gekennzeichnet, dass** die Ausschaltdauer des Erregerstroms zwischen 0,04 Sekunden und 1 Sekunde beträgt.

4. Staubsauger nach einem der voranstehenden Ansprüche, **dadurch gekennzeichnet, dass** der Erregerstrom in zeitlichen Abständen von circa 10 Sekunden bis etwa 120 Sekunden ausschaltbar ist.

5. Staubsauger nach Anspruch 4, **dadurch gekennzeichnet, dass** der Erregerstrom in gleichbleibenden zeitlichen Abständen von circa 10 Sekunden bis etwa 60 Sekunden mehrmals hintereinander für circa 0,05 Sekunden bis etwa 0,15 Sekunden ausschaltbar ist.

6. Staubsauger nach einem der voranstehenden Ansprüche, **dadurch gekennzeichnet, dass** parallel zum Elektromagneten (50) mindestens ein bei Wegfall der Strombeaufschlagung des Elektromagneten (50) zumindest einen Teil der im Elektromagneten (50) gespeicherten Energie aufnehmendes elektrisches Bauteil (79, 80) geschaltet sind.

7. Staubsauger nach einem der voranstehenden Ansprüche, **dadurch gekennzeichnet, dass** der Elektromagnet (50) an einer Ventilhalterung (32) angeordnet ist, die den Ventilsitz ausbildet, und dass der Ventilkörper (34) ein dem Elektromagneten (50) zugeordnetes magentisierbares Element (58) aufweist, das in der Schließstellung des Ventilkörpers (34) mit dem Elektromagneten (50) einen Magnetkreis ausbildet.

8. Staubsauger nach Anspruch 7, **dadurch gekennzeichnet, dass** das magnetisierbare Element (58) in der Schließstellung des Ventilkörpers (34) unter Ausbildung eines Luftspaltes an der Stirnseite des Elektromagneten (50) anliegt.

9. Staubsauger nach Anspruch 8, **dadurch gekennzeichnet, dass** die Breite des Luftspaltes kleiner als 1 Millimeter ist.

10. Staubsauger nach einem der voranstehenden Ansprüche, **dadurch gekennzeichnet, dass** die federelastische Rückstelleinrichtung eine Schließfeder (36) und eine Anschlagfeder (43) aufweist, wobei die Schließfeder (36) den Ventilkörper (34) unabhängig von seiner Lage relativ zum Ventilsitz mit einer Schließkraft beaufschlagt und wobei die Anschlagfeder (43) den Ventilkörper (34) nur in einer zum Ventilsitz beabstandeten Stellung mit einer Rückstoßkraft beaufschlagt.

11. Staubsauger nach Anspruch 10, **dadurch gekennzeichnet, dass** die Federkonstante der Anschlagfeder (43) größer ist als die Federkonstante des Schließfeder (36).

12. Staubsauger nach Anspruch 10 oder 11, **dadurch gekennzeichnet, dass** die Schließfeder (36) und die Anschlagfeder (43) als Schraubenfedern mit unterschiedlichen Durchmessern ausgestaltet sind, wobei eine der beiden Schraubenfedern die andere Schraubenfeder in Umfangsrichtung umgibt.

13. Staubsauger nach einem der voranstehenden Ansprüche, **dadurch gekennzeichnet, dass** der Staubsauger (10) ein einziges Filter (24) aufweist.

14. Staubsauger nach Anspruch 13, **dadurch gekennzeichnet, dass** das Filter (24) durch Öffnen des Schließventils (30) über seine gesamte Fläche mit Fremdluft beaufschlagbar ist.

15. Staubsauger nach einem der voranstehenden Ansprüche, **dadurch gekennzeichnet, dass** das mindestens eine Filter (24) mittels des mindestens einen Schließventils (30) unter Aufrechterhaltung eines Unterdrucks im Mündungsbereich eines in den Saugeinlass (18) einmündenden Saugschlauches (20) mit Fremdluft beaufschlagbar ist.

## Claims

1. Vacuum cleaner with a dirt collection tank having a suction inlet and being in flow connection with at least one suction unit (16) via at least one filter (24) and at least one extraction line, and with at least one external air inlet (48) opening into the extraction line downstream of the at least one filter and being closable by means of at least one closing valve (30), the at least one closing valve having a valve member movable back and forth between a closed position in which it abuts on a valve seat and an open position in which it is spaced from the valve seat, the valve member being acted upon by a spring-elastic restoring device with a closing force and in the closed position, in addition, by a magnetic holding device with a magnetic holding force, **characterized in that** the magnetic holding device has an electromagnet (50) adapted to be acted upon with an exciting current for the purpose of closing the closing valve (30), the electromagnet (50) being connected to an electrical switching unit (74) for the purpose of switching the exciting current on and off, and **in that** the valve member (34) is movable continuously back into the closed position via the open position, proceeding from the closed position, when the exciting current is interrupted, the switch-off time of the exciting current being adapted to the movement time of the valve member (34).

2. Vacuum cleaner in accordance with claim 1, **characterized in that** the switch-off time of the exciting current is approximately 0.02 seconds to approximately 2 seconds.

3. Vacuum cleaner in accordance with claim 1 or 2, **characterized in that** the switch-off time of the exciting current is between 0.04 seconds and 1 second.

4. Vacuum cleaner in accordance with any one of the preceding claims, **characterized in that** the exciting current is adapted to be switched off at time intervals of approximately 10 seconds to approximately 120 seconds.

5. Vacuum cleaner in accordance with claim 4, **characterized in that** the exciting current is adapted to be switched off several times one after the other for approximately 0.05 seconds to approximately 0.15 seconds at uniform time intervals of approximately 10 seconds to approximately 60 seconds.

6. Vacuum cleaner in accordance with any one of the preceding claims, **characterized in that** connected in parallel to the electromagnet (50) is at least one electrical component (79, 80) which takes up at least some of the energy stored in the electromagnet (50) when the current acting on the electromagnet (50) ceases.

7. Vacuum cleaner in accordance with any one of the preceding claims, **characterized in that** the electromagnet (50) is arranged on a valve holding device (32) forming the valve seat, and **in that** the valve member (34) has a magnetizable element (58) which is associated with the electromagnet (50) and forms a magnetic circuit with the electromagnet (50) in the closed position of the valve member (34).

8. Vacuum cleaner in accordance with claim 7, **characterized in that** in the closed position of the valve member (34) the magnetizable element (58) abuts on the end side of the electromagnet (50), thereby forming a gap of air.

9. Vacuum cleaner in accordance with claim 8, **characterized in that** the width of the gap of air is smaller than 1 millimeter.

10. Vacuum cleaner in accordance with any one of the preceding claims, **characterized in that** the spring-elastic restoring device has a closing spring (36) and a stop spring (43), the closing spring (36) acting on the valve member (34) with a closing force irrespective of its position relative to the valve seat, and the stop spring (43) acting on the valve member (34) with a repulsion force only in a position spaced from the valve seat.

11. Vacuum cleaner in accordance with claim 10, **characterized in that** the spring constant of the stop spring (43) is greater than the spring constant of the closing spring (36).

12. Vacuum cleaner in accordance with claim 10 or 11, **characterized in that** the closing spring (36) and the stop spring (43) are designed as helical springs with different diameters, one of the two helical springs surrounding the other helical spring in the circumferential direction.

13. Vacuum cleaner in accordance with any one of the preceding claims, **characterized in that** the vacuum cleaner (10) has a single filter (24).

14. Vacuum cleaner in accordance with claim 13, **characterized in that** the filter (24) is adapted to be acted upon with external air over its entire surface area as a result of the closing valve (30) being opened.

15. Vacuum cleaner in accordance with any one of the preceding claims, **characterized in that** the at least one filter (24) is adapted to be acted upon with external air by means of the at least one closing valve (30) whilst a vacuum is maintained in the opening area of a suction hose (20) opening into the suction inlet (18).

## Revendications

1. Aspirateur pourvu d'un récipient collecteur de saletés, lequel présente une entrée d'aspiration et est en liaison fluidique avec au moins une unité d'aspiration (16) par l'intermédiaire d'au moins un filtre (24) et d'au moins une conduite d'aspiration, et pourvu d'au moins une entrée d'air extérieur (48) débouchant en aval du ou des filtres dans la conduite d'aspiration, ladite entrée pouvant être fermée au moyen d'au moins une soupape de fermeture (30), la ou les soupapes de fermeture comprenant un corps de soupape animé d'un mouvement de va-et-vient entre une position de fermeture, dans laquelle il repose sur un siège de soupape, et une position d'ouverture, dans laquelle il est espacé du siège de soupape, ledit corps étant exposé à une force de fermeture par un dispositif de rappel élastique et, dans la position de fermeture, étant exposé en plus à une force de retenue magnétique par un élément de retenue magnétique, **caractérisé en ce que** l'élément de retenue magnétique comprend un électroaimant (50) pouvant être exposé à un courant d'excitation pour la fermeture de la soupape de fermeture (30), l'électroaimant (50) étant relié à une unité de commutation électrique (74) pour activer et désactiver le courant d'excitation, et **en ce que** le corps de soupape (34), lorsque le courant d'excitation est interrompu, passe en continu de la position de fermeture à la position d'ouverture en revenant à la position de fermeture, la durée de désactivation du courant d'excitation étant adaptée à la durée de déplacement du corps de soupape (34).

2. Aspirateur selon la revendication 1, **caractérisé en ce que** la durée de désactivation du courant d'excitation s'étend d'environ 0,02 seconde à sensiblement 2 secondes.

3. Aspirateur selon la revendication 1 ou 2, **caractérisé en ce que** la durée de désactivation du courant d'excitation est comprise entre 0,04 seconde et 1 seconde.

4. Aspirateur selon l'une quelconque des revendications précédentes, **caractérisé en ce que** le courant d'excitation peut être désactivé par intervalles allant d'environ 10 secondes à environ 120 secondes.

5. Aspirateur selon la revendication 4, **caractérisé en ce que** le courant d'excitation peut être désactivé par multiples intervalles constants successifs allant d'environ 10 secondes à environ 60 secondes pendant un période allant d'environ 0,05 seconde à environ 0,15 seconde.

6. Aspirateur selon l'une quelconque des revendications précédentes, **caractérisé en ce qu'**au moins un composant électrique (79, 80), absorbant au moins une partie de l'énergie accumulée dans l'électroaimant (50), lorsque l'électroaimant (50) cesse d'être exposé au courant, est monté parallèlement à l'électroaimant (50).

7. Aspirateur selon l'une quelconque des revendications précédentes, **caractérisé en ce que** l'électroaimant (50) est disposé sur un élément de retenue de soupape (32) qui forme le siège de soupape, et **en ce que** le corps de soupape (34) comprend un élément magnétisable (58) associé à l'électroaimant (50), ledit élément formant un circuit magnétique avec l'électroaimant (50), lorsque le corps de soupape (34) se trouve dans la position de fermeture.

8. Aspirateur selon la revendication 7, **caractérisé en ce que** l'élément magnétisable (58), lorsque le corps de soupape (34) se trouve dans la position de fermeture, repose sur la face frontale de l'électroaimant (50), ce qui entraîne la formation d'un entrefer.

9. Aspirateur selon la revendication 8, **caractérisé en ce que** la largeur de l'entrefer est inférieure à 1 millimètre.

10. Aspirateur selon l'une quelconque des revendications précédentes, **caractérisé en ce que** le dispositif de rappel élastique comprend un ressort de fermeture (36) et un ressort de butée (43), le ressort de fermeture (36) exposant le corps de soupape (34), à une force de fermeture, indépendamment de la position dudit corps par rapport au siège de soupape, et le ressort de butée (43) n'exposant le corps de soupape (34) à une force de recul que lorsque ledit corps se trouve dans une position espacée du siège de soupape.

11. Aspirateur selon la revendication 10, **caractérisé en ce que** la constante de rappel du ressort de butée (43) est supérieure à la constante de rappel du ressort de fermeture (36).

12. Aspirateur selon la revendication 10 ou 11, **caractérisé en ce que** le ressort de fermeture (36) et le ressort de butée (43) sont réalisés sous la forme de ressorts hélicoïdaux pourvus de différents diamètres, un des deux ressorts hélicoïdaux entourant l'autre ressort hélicoïdal dans la direction circonférentielle.

13. Aspirateur selon l'une quelconque des revendications précédentes, **caractérisé en ce que** l'aspirateur (10) comprend un seul filtre (24).

14. Aspirateur selon la revendication 13, **caractérisé en ce que** le filtre (24), par ouverture de la soupape de fermeture (30), peut être exposé à de l'air extérieur sur toute l'étendue de sa surface.

15. Aspirateur selon l'une quelconque des revendications précédentes, **caractérisé en ce que** le ou les filtres (24) peuvent être exposés à l'air extérieur au moyen de la ou des soupapes de fermeture (30), avec maintien d'une dépression dans la zone d'embouchure d'un tuyau flexible d'aspiration (20) débouchant dans l'entrée d'aspiration (18).
